(19) Europäisches Patentamt

European Patent Office

Office européen des brevets

(11) **EP 1 074 019 B1**

(12) **EUROPEAN PATENT SPECIFICATION**

(45) Date of publication and mention
of the grant of the patent:
**22.01.2003 Bulletin 2003/04**

(21) Application number: **99924814.9**

(22) Date of filing: **21.04.1999**

(51) Int Cl.⁷: **G10L 15/06**

(86) International application number:
**PCT/EP99/02673**

(87) International publication number:
**WO 99/054869 (28.10.1999 Gazette 1999/43)**

(54) **ADAPTATION OF A SPEECH RECOGNIZER FOR DIALECTAL AND LINGUISTIC DOMAIN VARIATIONS**

ANPASSUNG EINES SPRACHERKENNERS ZU DIALEKTISCHEN UND LINGUISTISCHEN GEBIETSVARIANTEN

ADAPTATION D'UN SYSTEME DE RECONNAISSANCE DE LA PAROLE A DES VARIATIONS DANS LES DOMAINES DIALECTAL ET LINGUISTIQUE

(84) Designated Contracting States:
**AT BE DE FR GB IT**

(30) Priority: **22.04.1998 US 82656 P**
**23.04.1998 US 66113**

(43) Date of publication of application:
**07.02.2001 Bulletin 2001/06**

(73) Proprietors:
• **International Business Machines Corporation
Armonk, N.Y. 10504 (US)**
Designated Contracting States:
**AT BE FR GB IT**
• **IBM DEUTSCHLAND INFORMATIONS SYSTEME GMBH
D-70548 Stuttgart (DE)**
Designated Contracting States:
**DE**

(72) Inventors:
• **FISCHER, Volker
D-69181 Leimen (DE)**
• **GAO, Yuqing
Mount Kisco, NY 10549 (US)**
• **PICHENY, Michael, A.
White Plains, NY 10606 (US)**
• **KUNZMANN, Siegfried
D-69126 Heidelberg (DE)**

(74) Representative: **Teufel, Fritz, Dipl.-Phys.
IBM Deutschland Informationssysteme GmbH,
Patentwesen und Urheberrecht
70548 Stuttgart (DE)**

(56) References cited:
• **DIAKOLOUKAS V ET AL: "Development of dialect-specific speech recognizers using adaptation methods" 1997 IEEE INTERNATIONAL CONFERENCE ON ACOUSTICS, SPEECH, AND SIGNAL PROCESSING (CAT. NO.97CB36052), 1997 IEEE INTERNATIONAL CONFERENCE ON ACOUSTICS, SPEECH, AND SIGNAL PROCESSING, MUNICH, GERMANY, 21-24 APRIL 1997, pages 1455-1458 vol.2, XP002111686 1997, Los Alamitos, CA, USA, IEEE Comput. Soc. Press, USAISBN: 0-8186-7919-0**
• **HSIAO-WUEN HON ET AL: "TOWARDS SPEECH RECOGNITION WITHOUT VOCABULARY-SPECIFIC TRAINING" PROCEEDINGS OF THE EUROPEAN CONFERENCE ON SPEECH COMMUNICATION AND TECHNOLOGY (EUROSPEECH), PARIS, SEPT. 26 - 28, 1989, vol. 1, no. CONF. 1, 26 September 1989 (1989-09-26), pages 481-484, XP000209672 TUBACH J P;MARIANI J J**
• **"BUILDING BASEFORMS FOR A NEW APPLICATION DOMAIN" IBM TECHNICAL DISCLOSURE BULLETIN, vol. 36, no. 4, 1 April 1993 (1993-04-01), pages 93-94, XP000364452 ISSN: 0018-8689**

**Description**

**1 Background of the Invention**

**1.1 Field of the Invention**

The present invention relates to speech recognition systems. More particularly, the invention relates to a generator for generating an adapted speech recognizer. Furthermore the invention also relates to a method of generating such an adapted speech recognizer said method being executed by said generator.

**1.2 Description and Disadvantages of Prior Art**

For more than two decades speech recognition systems use Hidden Markov Models to capture the statistical properties of acoustic subword units, like e.g. context dependent phones or subphones. An overview on this topic may be found for instance in L. Rabiner, A Tutorial on Hidden Markov Models and Selected Applications in Speech Recognition, Proceedings of the IEEE, Vol. 77(2), pp. 257-285, 1989 or in X. Huang and Y. Ariki and M. Jack, Hidden Markov Models for Speech Recognition, Information Technology Series, Edinburgh University Press, Edinburgh, 1990.

A Hidden Markov Model is a stochastic automaton that operates on a finite set of states $S = \{s_1, ..., s_N\}$ and allows for the observation of an output each time $t$, $t = 1,2,...,T$ a state is occupied. It is defined by a tuple $HMM = (\Pi, A, B)$ where the initial state vector

$$\Pi = [\, \Pi_i \,] = [\, P(\mathrm{s}(1) = s_i) \,],\ 1 \leq i \leq N, \tag{1}$$

gives the probabilities that the HMM occupies state $s_i$ at time t= 1, and

$$A = [\, a_{ij} \,] = [\, P(s(t+1) = s_j \mid s(t)=s_i) \,],\ 1 \leq i, j \leq N, \tag{2}$$

gives the probabilities for a transition from state $s_i$ to $s_j$, assuming a first order time invariant process. In case of discrete HMMs the observations $o_l$ are from a finite alphabet $O=\{o_1,..., o_L\}$ , and

$$B = [\, b_{kl} \,] = [\, p(o_l \mid s(t) = s_k) \,],\ 1 \leq k \leq N,\ 1 \leq l \leq L. \tag{3}$$

is a stochastic matrix that gives the probabilities to observe $o_l$ in state $s_k$.

For (semi-)continuous HMMs, which provide the state of the art in today's large vocabulary continuous speech recognition systems, the observations are (continuous valued) feature vectors c, and the output probabilities are defined by the probability density functions

$$B = [\, b_{kl} \,] = [\, p(c_l \mid s(t) = s_k) \,],\ 1 \leq k \leq N,\ 1 \leq l \leq L. \tag{4}$$

The actual distribution $p(c_l \mid s_k)$ of the feature vectors is usually approximated by a mixture of $N_k$ Gaussians:

$$p(c_l \mid s_k) = \sum_{i=1}^{N_k} \omega_{ik} N(c_l \mid \mu_{ik}, \Sigma_{ik}) \tag{5}$$

$$= \sum_{i=1}^{N_k} \omega_{ik} \cdot |2\pi\Sigma_{ik}|^{-1/2} \cdot \exp(-(c_i - \mu_{ik})_T \Sigma_{ik}^{-1}(c_l - \mu_{ik})/2); \tag{6}$$

**EP 1 074 019 B1**

the mixture component weights ω, the means μ, and the covariance matrices Σare estimated from a large amount of transcribed speech data during the training of the recognizer. A well known procedure to solve that problem is the EM-algorithm (illustrated for instance by A. Dempster and N. Laird and D. Rubin, Maximum Likelihood from Incomplete Data via the EM Algorithm, Journal of the Royal Statistical Society, Series B (Methodological), 1977, Vol. 39(1), pp. 1-38), and the markov model parameters Π,A,B are usually estimated by the use of the forward-backward algorithm (illustrated for instance by L. Rabiner, A Tutorial on Hidden Markov Models and Selected Applications in Speech Recognition, Proceedings of the IEEE, Vol. 77(2), pp. 257-285, 1989).

The training of a speech recognizer for an arbitrary language is described in some detail by L. Bahl and S. Balakrishnan-Aiyer and J. Bellegarda and M. Franz and P. Gopalakrishnan and D. Nahamoo and M. Novak and M. Padmanabhan and M. Picheny and S. Roukos, Performance of the IBM large vocabulary continuous speech recognition system on the ARPA Wall Street Journal task, Detroit, Proc. of the IEEE Int. Conference on Acoustics, Speech, and Signal Processing, pp. 41-44, 1995 or by L. Bahl and P. de Souza and P. Gopalakrishnan and D. Nahamoo and M. Picheny, Context-dependent Vector Quantization for Continuous Speech Recognition, Minneapolis, Proc. of the IEEE Int. Conference on Acoustics, Speech, and Signal Processing, 1993. The procedure is briefly outlined in the following, since it provides the basis for the current invention. The algorithm assumes the existence of a labelled training corpus and a speaker independent recognizer for the computation of an initial alignment between the spoken words and the speech signal. After the framewise computation of cepstral features and their first and second order derivatives, the Viterbi algorithm is used for the selection of phonetic baseforms that best matches the utterances. An outline of the Viterbi algorithm can be found in Viterbi, A.J., Error Bounds for Convolutional Codes and an asymptotically optimum Decoding Algorithm, IEEE Trans. on Information Theory, Vol. 13, pp. 260--269, 1967.

Since the acoustic feature vectors show significant variations in different contexts, it is important to identify the phonetic contexts that lead to specific variations. For that purpose the labelled training data is passed through a binary decision network that separates the contexts into equivalence classes depending on the variations observed in the feature vectors. A multi-dimensional Gaussian mixture model is used to model the feature vectors that belong to each class represented by the terminal nodes (leaves) of the decision network. These models are used as initial observation densities in a set of context-dependent, continuous parameter HMM, and are further refined by running the forward-backward algorithm, which converges to a local optimum after a few iterations. The total number of both context dependent HMMs and Gaussians is limited by the specification of an upper bound and depends on the amount and contents of the training data

Both the large amount of data needed for the estimation of model parameters and relevant contexts and the need to run several forward-backward iterations make the training of a speech recognizer a very time consuming process. Moreover, speakers have to face a large degradation in recognition accuracy, if their pronunciation differs from those observed during the training of the recognizer. This can be caused by poorly trained acoustic models due to a mismatch between the collected data and the task domain. This can be considered as the main reason for the fact that most commercially available speech recognition products (like e.g. IBM ViaVoice, Dragon Naturally Speaking, Kurzweill) at least recommend, if not enforce, a new user to read an enrollment script of about 50 - 250 sentences for a speaker dependent reestimation of the model parameters.

For such reestimation processes for instance speaker adaptation techniques like the maximum a posteriori estimation of gaussian mixture observations (MAP adaptation) - refer for instance to J. Gauvain and C. Lee, Maximum a Posteriori Estimation of Multivariate Gaussian Mixture Observations of Markov Chains, IEEE Trans. on Speech and Audio Processing, Vol. 2(2), pp. 291--298, 1994 - or the maximum likelihood linear regression (MLLR adaptation) - refer for instance to C. Leggetter and P. Woodland, Maximum likelihood linear regression for speaker adaptation of continuous density hidden Markov models, Computer Speech and Language, Vol. 9, pp. 171--185, 1995 - are exploited during the training of the recognizer.

### 1.3 Objective of the Invention

Given these problems, the invention is based on the objective of a reduction of training effort for individual end users and an improved speaker independent recognition accuracy.

It is a further objective of the current invention to improve the easiness and the rapidness of development of new adapted speech recognizers.

### 2 Summary and Advantages of the Invention

The objective of the invention is solved by the independent claims.

The objective of the invention is solved by claim 1.

The generator of an adapted speech recognizer according the teaching of the current application is being based upon a base speech recognizer 201 for a definite but arbitrary base language. The generator also comprises an additional speech data corpus 202 used for generation of said adapted speech recognizer. Said additional speech data corpus comprises a collection of domain specific speech data. Furthermore said generator comprises reestimation means 203 for reestimating acoustic model parameters of the base speech recognizer by a speaker adaption technique. Said additional speech data corpus is exploited by said reestimation means for generating the adapted speech recognizer.

The technique proposed by the current invention thus achieves a significant reduction of training effort for individual end users, an improved speaker independent recognition accuracy for specific domains and dialect speakers, and the rapid development of new data files for speech recognizers in specific environments. Moreover also the recognition rate of non-dialect speakers is also improved.

Whereas in the past speaker adaptation techniques were usually applied to an individual end users speech data and therefore yield in a speaker dependent speech recognizer, in the current invention they are applied to a domain specific collection of training data from several speakers. This allows for an improved speaker independent recognition especially (but not solely) for a given dialect and domain and minimizes the individual end users investment to customize the recognizer to their needs.

Another important aspect of this invention is the reduced effort for the generation of a specific speech recognizer: whereas other commercially available toolkits start from the definition of subword units and/or HMM topologies, and thus require a considerable large amount of training data, the current approach starts from an already trained general purpose speech recognizer.

The approach of the current teaching offers a scalable recognition accuracy, if specific domains are handled in an integrated speech recognizer. As the current invention is completely independent from the specific domain they may be combined in any possible combination.

Moreover the amount of additional data (the additional speech data corpus) is very moderate. Only few additional domain specific data is required and besides that it is inexpensive and easy to collect.

Finally the current invention allows to reduce the time for the upfront training of the recognizer significantly. Therefore it allows for rapid development of new data files for recognizers in specific environments or combination of environments.

Additional advantages are accomplished by claim 2.

According to a further embodiment of the proposed invention said additional speech data corpus can be collected unsupervised or supervised.

Based on such a teaching complete flexibility is offered to an exploiter of the current teaching on how the additional speech data corpus is being provided.

Additional advantages are accomplished by claim 3.

According to a further embodiment of the proposed invention said acoustic model is a Hidden-Markov-Model (HMM).

Thus the current teaching my be applied to the HMM technology. Therefore the HMM approach, one of the most successful techniques in the area of speech recognition, can be further improved with the current teachings.

Additional advantages are accomplished by claim 4.

According to a further embodiment of the proposed invention said speaker adaption technique is the Maximum-A-Posteriori-adaption (MAP) or the Maximum-Likelihood-Linear-Regression-adaption (MLLR).

These approaches allow also to deal with situations in which only sparse training data is available. Excellent adaptation results in terms of recognition accuracy and generation speed of the adapted speech recognizer are achieved with especially these speaker adaptation techniques.

Claim 5 achieves additional benefits.

According to this additional embodiment of the proposed invention smoothing means 204 are introduced for optionally smoothing the reestimated acoustic acoustic model parameters.

Experiments revealed that additional smoothing further improves the recognition accuracy and the adaptation speed. Especially in cases with a limited amount of training data these improvements are of specific importance.

Additional advantages are accomplished by claim 6, 7 and 8. According to a further embodiment of the proposed invention said smoothing means performing a Bayesian smoothing. A smoothing factor K from the range 1 to 500 is being suggested. Especially the subrange for smoothing factor K of 20 to 60 is proposed.

Bayesian smoothing has been shown to produce good results in terms of recognition accuracy and performance. Intensive experimentation revealed that a smoothing factor K from the range 1 to 500 accomplishes good results. Especially the subrange for smoothing factor K of 20 to 60 turned out to achieve the best results.

Additional advantages are accomplished by claim 9.

According to a further embodiment of the proposed invention iteration means 205 for optionally iterating the operation of said reestimation means and for optionally iterating the operation of said smoothing means are suggested. The iteration may be based on said reestimated dialect or domain specific acoustic model parameters or based on said base language acoustic model parameters.

This teaching allows for a stepwise approach to the generation of an optimally adapted speech recognizer.

Additional advantages are accomplished by claim 10.

According to a further embodiment of the proposed invention said iteration means use a modified additional speech data corpus and/or said iteration means use a new smoothing factor value K.

With this teaching a remarkable amount of selective influence on the iteration process is possible. Depending on the nature of said additional speech data corpus the iteration process may be based on an enlarged or modified additional speech data corpus. For instance a changed smoothing factor allows to assist the generation process depending on the narrowness of the amount of training data.

Additional advantages are accomplished by claim 11.

According to a further embodiment of the proposed invention said adapted speech recognizer is speaker independent.

This approach offers at the same time the benefit that an adapted speech recognizer can be generated which is already tailored to a certain domain or set of domains but which still is speaker independent. Nevertheless said adapted speech recognizer may be further personalized resulting in a speaker dependent speech recognizer. Thus at the same time specialization and flexibility is offered at the same time.

The objective of the invention is solved by claim 12.

A method for generating an adapted speech recognizer using a base speech recognizer 201 for a definite but arbitrary base language is suggested. Said method comprises a first step 202 of providing an additional speech data corpus. Said additional speech data corpus comprises a collection of domain specific speech data. Furthermore said method comprises a second step 203 of reestimating acoustic model parameters of said base speech recognizer by a speaker adaption technique using said additional speech data corpus.

The benefits achieved by teaching of claim 12 are those already discussed with claim 1.

Additional advantages are accomplished by claim 13.

According to a further embodiment of the proposed invention said method comprises an optional third step 204 for smoothing the reestimated acoustic model parameters.

Experiments revealed that additional smoothing further improves the recognition accuracy and the adaptation speed. Especially in cases with a limited amount of training data these improvements are of specific importance. For further advantages refer to the benefits discussed with claim 6, 7, and 8 above.

Additional advantages are accomplished by claim 14.

According to a further embodiment of the proposed invention said method comprises an optional fourth step 205 for iterating said first step by providing a modified additional speech data corpus and for iterating said second and third step based on said reestimated acoustic model parameters or based on said base acoustic model parameters.

For advantages adhering to this teaching refer to the benefits discussed with claim 9 above.

Additional advantages are accomplished by claim 15.

According to a further embodiment of the proposed invention said acoustic model is a Hidden Markov Model (HMM). Moreover it is taught that said speaker adaption technique is the Maximum-A-Posteriori-adaption (MAP) or the Maximum-Likelihood-Linear-Regression-adaption (MLLR). In addition it is suggested to perform a Bayesian smoothing.

The advantages of this approach has been discussed with claim 3, 4 and claims 6, 7 and 8 above.

Additional advantages are accomplished by claim 16.

According to a further embodiment of the proposed invention said adapted speech recognizer is speaker independent.

Benefits related to this teaching are discussed together with claim 11 above.

## 3 Brief Description of the Drawings

**Figure 1**    is a diagram reflecting the overall structure of the state-of-the-art adaptation process visualizing the generation of a speaker dependent speech recognizer from a speaker independent speech recognizer of the base language.

**Figure 2**    is a diagram reflecting the overall structure of the adaptation process according the current invention visualizing the generation of an improved speaker independent speech recognizer from a speaker independent speech recognizer of the base language. Said improved speaker independent speech recognizer may be the basis for further customization generating an improved speaker dependent speech recognizer.

**Figure 3**    gives a comparison of the error rates of the baseline recognizer (VV), the standard training procedure (VV-S), and the scalable fastboot method (VV-G) normalized to the error rate of the baseline recognizer (VV) for a German test speaker.

## 4 Description of the Preferred Embodiment

Throughout this description the usage of current teaching is not limited to a certain language, a certain dialect or a certain usage domain. If a certain language, a certain dialect or a certain domain is mentioned this is to be interpreted as an example only not limiting the scope of the invention.

Moreover if the current description is referring to a dialect/domain this may be interpreted as a specific dialect/domain or any combination of dialects/domains.

## 4.1 Introduction

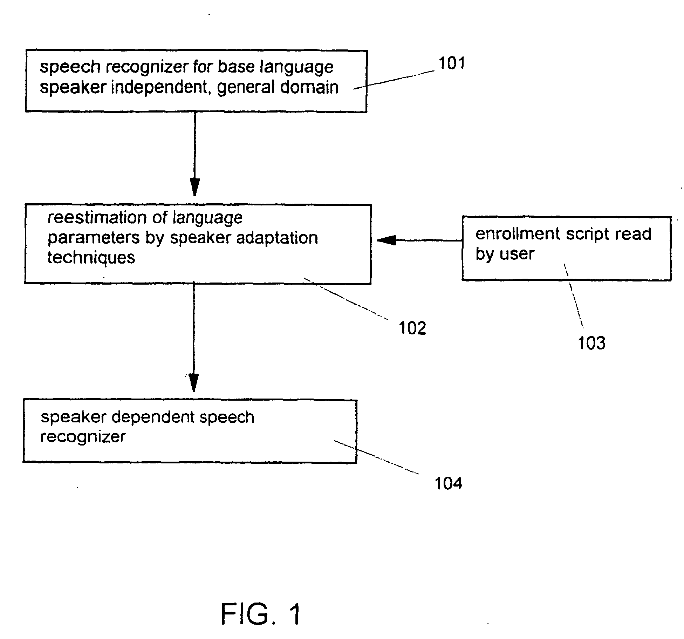

The training of a for instance Hidden Markov Model based speech recognizer for a given language requires the collection of a large amount of general speech data for the detection of relevant phonetic contexts and the proper estimation of acoustic model parameters. However, a significant decrease in recognition accuracy can be observed, if a speaker's pronunciation differs significantly from those present in the training corpus, Therefore, commercially available speech recognizers partly impose the estimation of acoustic parameters to the individual end-user, by enforcing the personalization process depicted in Fig. 1.

The starting point is a speech recognizer 101 for a base language which is speaker **independent** and without specialization to any domain. The individual user has to read a predefined enrollment script 103 which is a further input to the reestimation process 102. Within this reestimation process the parameters of the underlying acoustic model are adapted by available speaker adaptation techniques according to the state of the art. The result of this generation process is the output of a speaker **dependent** speech recognizer.

The current invention is teaching a fast bootstrap (i.e. upfront) procedure for the training of a speech recognizer with improved recognition accuracy; i.e. the current invention is proposing a generation process for an additionally adapted speaker **independent** speech recognizer based upon a general speech recognizer for the base language.

According to the current teaching both accuracy and speed of the recognition system can be significantly improved by explicit modelling of language dialects and **orthogonally** by the integration of domain specific training data in the modelling process. The architecture of the invention allows to improve the recognition system along both of these directions. The current invention utilizes the fact that for certain dialects, like e.g. Austrian German or Canadian French, the phonetic contexts are similar in the base language (German or French, resp.), whereas acoustic model parameters differ significantly due to different pronunciations. Similar, not well trained acoustic models for specific domains (e.g. base domain: office correspondence, specific domain: radiology) can be estimated more accurate by the application of the invention to a limited amount of acoustic data from the target domain.

By upfront training of dialects and/or specific domains towards a large number of end users the performance of the recognition system is tremendously increased and user investment to customize the recognizer to their needs is minimized.

According the current teaching it is in addition possible to reduce the training procedure to the computation of Hidden Markov Model parameters. Moreover, it is possible to use Bayesian smoothing techniques for the better utilization of a small amount of dialect or domain specific training data and for the achievement of a scalable recognition accuracy for a specific dialect within a base language (or domain, resp.).

Thus, based on these techniques, the current invention achieves the reduction of training efforts for individual end users, an improved speaker independent recognition accuracy for specific domains and dialect speakers, and the rapid development of new data files for speech recognizers in specific environments.

## 4.2 Solution

The current invention (called **fastboot** in the remainder) utilizes the observation that speaker adaptation techniques, like e.g. the maximum a posteriori estimation of gaussian mixture observations (MAP adaptation) or maximum likelihood linear regression (MLLR adaptation), yield a significant larger improvement in recognition accuracy for dialect speakers than for speakers that use pronunciations observed during the training of the recognizer. According to the current teaching this approach results in improved speaker independent recognition accuracy not only for dialect speakers. These techniques move the output probabilities $B$ of the HMMs to a speakers particular acoustic space, and thus it is achieved that

o  the main differences between dialect and base language are captured by the output probabilities of the HMMs,
o  the trained parameters for the base language already provide good initial values for a dialect specific reestimation by the forward-backward algorithm, and
o  the reestimation of significant contexts from dialect data can be omitted to achieve a fast training procedure.

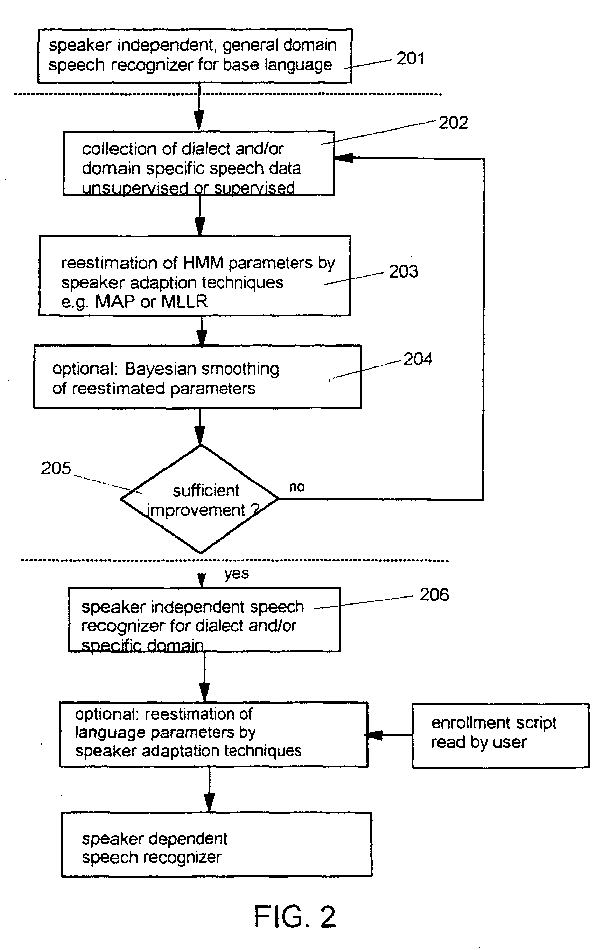

The basic teaching of the current invention is depicted in Fig. 2, teaching the application of additional speaker adaptation techniques for the upfront training, i.e. for the training before the speech recognizer is personalized to a specific user, of a speech recognizer for a **dialect** within a base language or for a **special domain**.

Referring to Fig. 2 the current invention suggest to start with base speech recognizer 201 for a base language.

For the final generation of an adapted speech recognizer an additional **speech** data corpus 202 is being provided; the current invention is suggesting the usage of actual **speech** data not comparable with a dictionary. This additional speech data corpus may comprise any collection of domain specific speech data and/or dialect specific speech data. The speech recognizer for the base language may be already used for an unsupervised collection of the additional speech data.

The generation process comprises reestimating 203 the acoustic model parameters of said base speech recognizer by one of the available speaker adaption techniques using the additional speech data corpus, thus generating an improved adapted speech recognizer reducing the potential training effort for individual end users and at the same time improving the speaker independent recognition accuracy for specific domains and/or dialect speakers.

Optionally the invention teaches the application of a further smoothing 204 of the reestimated acoustic model parameters. Bayesian smoothing is an efficient smoothing technology for that purpose. With respect to Bayesian smoothing good results have been achieved with a smoothing factor k from the range 1 to 500 (see below for more details with respect to the smoothing approach). Especially the range of 20 to 60 for the smoothing factor k ensued excellent results.

Optionally the current teaching suggests to iterate 205 the above mentioned generation process of reestimating the acoustic model parameters and the smoothing. The iteration can be based on the reestimated acoustic model parameters of the previous run or on the base acoustic model parameters. The iteration can be based on the decision whether the generated adapted speech recognizer shows sufficient recognition improvement. To achieve the desired recognition improvements the iteration step may be based for example on a modified additional speech data corpus and/or on the usage of a new smoothing factor value K.

Finally the process results in the generation 206 of a adapted speaker independent speech recognizer for dialect and/or specific domain.

Whereas in the past speaker adaptation techniques were usually applied to an individual end users speech data and therefore yield in a speaker dependent speech recognizer, in the current invention they are applied to a dialect and/or domain specific collection of training data from several speakers. This allows for an improved speaker independent recognition especially (but not solely) for a given dialect and domain and minimizes the individual end users investment to customize the recognizer to their needs.

Another important aspect of this invention is the reduced effort for the generation of a specific speech recognizer: whereas other commercially available toolkits start from the definition of subword units and/or HMM topologies, and thus require a considerable large amount of training data, the current approach starts from an already trained general purpose speech recognizer.

For further recognition improvement this invention suggest to optionally apply Bayesian smoothing to the reestimated parameters. In particular it is suggested to use the means $\mu_i^b$, variances $\Gamma_i^b$ and mixture component weights $\omega_i^b$ of the base language system (distinguished by the upper index b) for the reestimation of the dialect specific parameters $\mu_i^d$, $\Gamma_i^d$ and $\omega_i^d$ (distinguished by the upper index d) by Bayesian smoothing and tying (refer for instance to a J. Gauvain and C. Lee, Maximum a Posteriori Estimation of Multivariate Gaussian Mixture Observations of Markov Chains, IEEE Trans. on Speech and Audio Processing, Vol. 2(2), pp. 291--298, 1994) according to the following equations:

$$\mu_i^d = \frac{\sum_t c_i(t) x_t + \alpha_i \mu_i^b}{c_i - \alpha_i} \tag{7}$$

$$\Gamma_i^d = \frac{Y_i + \alpha_i (\Gamma_i^b + \mu_i^b \mu_i^{b,T})}{c_i + \alpha_i} - \mu_i^d \mu_i^{d,T} \tag{8}$$

$$Y_i = \sum_t c_i(t) x_t x_t^T \tag{9}$$

$$\omega_i^d = \frac{C_i + \alpha_i}{\sum\limits_{m \in M} (C_m + \alpha_m)} \quad , \qquad \alpha_j = k \cdot \omega_j^b \qquad\qquad\qquad (10)$$

Here,

$$C_i = \sum_t c_i(t)$$

is the sum of all posteriori probabilities $c_i(t)$ of the i-th gaussian, at time t, computed from all observed dialect data $x_t$, Ndenotes the total number of mixture components, and $M$ is the set of gaussians that belong to the same phonetic context as the i-th gaussian. The constant $k$ is referred to as a smoothing factor; it allows for an optimization of the recognition accuracy and depends on the relative amount of dialect training data.

**4.3 Example of an Embodiment of the Invention**

In 1997 IBM Speech Systems released ViaVoice, the first continuous speech recognition software available in 6 different languages. The German recognizer, for example, was trained with several hundred hours of carefully read continuous sentences. Speech was collected solely from less than thousand native German speakers (approx. 50 \% female, 50 \% male).

For test purposes of the current teaching 20 different German speakers (10 female, 10 male) and 20 native Austrian speakers (10 female, 10 male) were collected. All speakers read the same medium perplexity test script from an office correspondence domain, which is supposed to be one of the most important applications for continuous speech recognition.

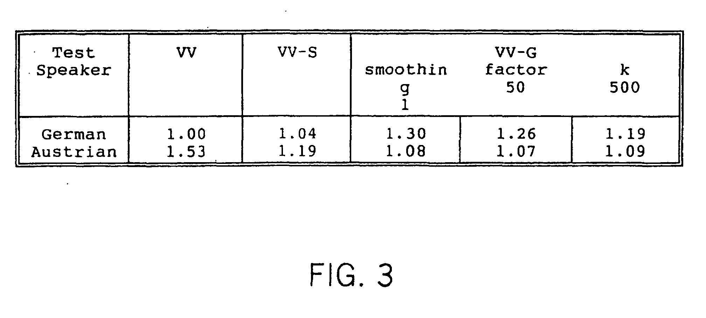

For both groups of speakers, Figure 3 compares the relative speaker independent error rates achieved with the baseline recognizer. Figure 3 shows a comparison of the error rates of the baseline recognizer (VV), the standard training procedure (VV-S), and the scalable fastboot method (VV-G) normalized to the error rate of the baseline recognizer (VV) for the German test speakers. The error rate for the Austrian speakers increases by more than 50 percent, showing the need to improve the recognition accuracy for dialect speakers. Therefore, for the follow up product, Via-Voice Gold (VV-G), only less than 50 hours of speech from approx. hundred native Austrian speakers (50 \% female, 50 \% male) have been collected and applied with the fastboot approach for the upfront training of the recognizer according to the current invention. Figure 3 compares the results achieved with the fastboot method (VV-G) to the standard training procedure (VV-S), that can be applied if both training corpora are pooled together. It becomes evident that the fastboot method is superior to the standard procedure and yields a 30 percent improvement for the dialect speakers. The results for different values of the smoothing factor show that recognition accuracy is scalable, which is an important feature, if an integrated recognizer for base language and dialect (or - orthogonal to this direction - base domain and specific domain) is needed. Moreover, since the pooled training corpus of the common recognizer (VV-S) is approx. 7 times larger than the Austrian training corpus, and usually the standard training procedure has to compute 4 - 5 forward-backward iterations, the fastboot method is at least 25 times faster. Thus, the rapid development of speech recognizers for specific dialects or domains becomes possible by our invention.

**4.4 Further Advantages of the Current Teaching**

The invention and its embodiment presented above demonstrate the following further advantages:

- The fastboot approach yields a significant decrease in speaker independent error rate for dialect speakers. Moreover also the recognition rate of non-dialect speakers is improved.
- The fastboot approach offers a scalable recognition accuracy, if dialects and/or specific domains are handled in an integrated speech recognizer.
- The fastboot approach uses only few additional domain specific or dialect data which is inexpensive and easy to collect.
- The fastboot approach reduces the time for the upfront training of the recognizer, and therefore allows for the rapid development of new data files for recognizers in specific environments.

**5 Acronyms**

| | |
|---|---|
| **HMM** | Hidden Markov Model |
| **MAP** | maximum a posteriori adaptation |
| **MLLR** | maximum likelihood linear regression adaptation |

**Claims**

1. Generator of an adapted-speech-recognizer comprising a base-speech-recognizer (201) for a base-language, and comprising an additional-speech-data-corpus (202) used for generation of said adapted-speech-recognizer, and said generator comprising reestimation-means (203) for reestimating acoustic-model-parameters of said base-speech-recognizer by a speaker-adaption-technique using said additional-speech-data-corpus, and
said generator being further **characterized in that**
said additional-speech-data-corpus comprising a collection of domain-specific-speech-data.

2. Generator according to claim 1
wherein said additional-speech-data-corpus is provided by unsupervised or supervised collection.

3. Generator according to any of above claims
wherein said acoustic-model is a Hidden-Markov-Model (HMM).

4. Generator according to claim 3
further comprising smoothing-means (204) for optionally smoothing the reestimated acoustic-model-parameters.

5. Generator according to claim 4
wherein said speaker-adaption-technique is the Maximum-A-Posteriori-adaption (MAP) or
wherein said speaker-adaption-technique is the Maximum-Likelihood-Linear-Regression-adaption (MLLR).

6. Generator according to claim 5
wherein said smoothing-means performs a Bayesian smoothing.

7. Generator according to claim 6
wherein a smoothing factor K is from the range 1 to 500.

8. Generator according to claim 6
wherein a smoothing factor K is from the range 20 to 60.

9. Generator according to any of above claims
further comprising iteration-means (205) for optionally iterating the operation of said reestimation-means and for optionally iterating the operation of said smoothing-means based on said reestimated-acoustic-model-parameters or based on said base-acoustic-model-parameters.

10. Generator according to claim 9
wherein said iteration-means uses a modified additional-speech-data-corpus and/or
wherein said iteration-means uses a new smoothing factor value K.

11. Generator according to any of above claims
wherein said adapted-speech-recognizer is speaker independent.

12. Method for generating an adapted-speech-recognizer using a base-speech-recognizer (201) for a base-language said method comprising a first-step (202) of providing an additional-speech-data-corpus, said additional-speech-data-corpus comprising a collection of domain-specific-speech-data, and said method comprising a second-step (203) of reestimating acoustic-model-parameters of said base-speech-recognizer by a speaker-adaption-technique using said additional-speech-data-corpus.

**13.** Method for generating an adapted-speech-recognizer according claim 12
said method comprising an optional third-step (204) for smoothing the reestimated acoustic-model-parameters.

**14.** Method for generating an adapted-speech-recognizer according claim 12 or 13
said method comprising an optional fourth-step (205)
for iterating said first-step by providing a modified additional-speech-data-corpus and
for iterating said second and third-step based on said reestimated-acoustic-model-parameters or based on said base-acoustic-model-parameters.

**15.** Method for generating an adapted-speech-recognizer according claim 12 to 14
wherein said acoustic-model is a Hidden-Markov-Model (HMM), and
wherein said speaker-adaption-technique is the Maximum-A-Posteriori-adaption (MAP) or
wherein said speaker-adaption-technique is the Maximum-Likelihood-Linear-Regression-adaption (MLLR), and
wherein said third-step performs a Bayesian smoothing.

**16.** Method for generating an adapted-speech-recognizer according claim 12 to 15
wherein said adapted-speech-recognizer is speaker independent.

**Patentansprüche**

**1.** Generator für einen angepassten Spracherkenner, enthaltend einen Grundspracherkenner (201) für eine Grundsprache, und
enthaltend einen zusätzlichen Sprachdatenkörper (202), der zum Generieren des angepassten Spracherkenner benutzt wird, und
wobei der Generator Neuabschätzmittel (203) zum Neuabschätzen von Akustikmodell-Parametern des Grundspracherkenners durch eine Sprecheranpasstechnik unter Verwendung des zusätzlichen Sprachendatenkörpers enthält, und
der Generator ferner **dadurch gekennzeichnet ist, dass**
der zusätzliche Sprachdatenkörper eine Sammlung von domänen-spezifischen Sprachdaten enthält.

**2.** Ein Generator gemäß Anspruch 1,
in dem der zusätzliche Sprachdatenkörper vorgesehen wird durch eine nichtüberwachte oder eine überwachte Sammlung.

**3.** Ein Generator gemäß einem beliebigen der vorstehenden Ansprüche,
in dem das Akustikmodell ein Verdecktes Markow-Modell (HMM) ist.

**4.** Ein Generator gemäß Anspruch 3,
der ferner Glättmittel (204) zum wahlweisen Glätten der neuabgeschätzten Akustikmodell-Parameter enthält.

**5.** Ein Generator gemäß Anspruch 4,
in dem die Sprecher-Angleichtechnik die maximale a posteriori Angleichung (MAP) ist, oder
in dem die Sprecher-Angleichtechnik die lineare Regressions-Angleichung maximaler Wahrscheinlichkeit ist.

**6.** Ein Generator gemäß Anspruch 5,
in dem das Glättmittel eine Bayes-Glättung durchführt.

**7.** Ein Generator gemäß Anspruch 6,
in dem ein Glättfaktor K im Bereich von 1 bis 500 liegt.

**8.** Ein Generator gemäß Anspruch 6,
in dem ein Glättfaktor K im Bereich von 20 bis 60 liegt.

**9.** Ein Generator gemäß einem beliebigen der obigen Ansprüche
ferner enthaltend Iterationsmittel (205) zum wahlweisen Wiederholen der Operation des Neuabschätzungsmittels und zum wahlweisen Wiederholen des Betriebs des Glättmittels auf der Basis der neuabgeschätzten Akustikmodell-Parameter oder auf der Basis der Grund-Akustikmodell-Parameter enthält.

**10.** Ein Generator gemäß Anspruch 9,
in dem das Wiederholungsmittel einen modifizierten zusätzlichen Sprechdatenkörper und/oder
in dem das Wiederholungsmittel einen neuen Glättfaktorwert K benutzt.

**11.** Ein Generator gemäß einem beliebigen der obigen Ansprüche,
in dem der angepasste Spracherkenner sprecher-unabhängig ist.

**12.** Verfahren zum Generieren eines angepassten Spracherkenners, unter Verwendung eines Grundspracherkenners (201) für eine Grundsprache,
wobei das Verfahren einen ersten Schritt (202), enthaltend das Vorsehen eines Zusatzdatenkörpers, umfasst, der Zusatzdatenkörper eine Sammlung domänen-spezifischer Sprechdaten umfasst, und
das Verfahren einen zweiten Schritt (203) der Neuabschätzung von Akustikmodell-Prametern des Grundspracherkenners durch eine Sprecheranpassungstechnik unter Verwendung des zusätzlichen Sprachdatenkörpers enthält.

**13.** Verfahren zum Generieren eines angepassten Spracherkenners gemäß Anspruch 12,
das Verfahren enthaltend einen wahlweisen dritten Schritt (204) zum Glätten der neuabgeschätzten Akustikmodell-Parameter umfasst.

**14.** Verfahren zum Generieren eines angepassten Spracherkenners gemäß Anspruch 12 oder 13,
wobei das Verfahren einen wahlweisen vierten Schritt (205) umfasst
zum Wiederholen des ersten Schritts durch Vorsehen eines modifizierten zusätzlichen Sprachdatenkörpers und
zum Wiederholen des zweiten und des dritten Schrittes auf der Grundlage der neuabgeschätzten Akustikmodell-Parameter oder auf der Grundlage der Grundakustikmodell-Parameter.

**15.** Verfahren zum Generieren eines angepassten Spracherkenners gemäß Anspruch 12 bis 14,
in denen das Akustikmodell ein Verdecktes-Markow-Modell (HMM) ist, und
in dem die Sprecheranpassungstechnik die Maximum-A-Posteriori-Anpassung (MAP) ist, oder
in dem die Sprecheranpassungstechnik die Linear-Regressions-Anpassung maximaler Wahrscheinlichkeit (MLLR) ist, und
in dem der dritte Schritt eine Bayes-Glättung durchführt.

**16.** Verfahren zum Generieren eines angepassten Spracherkenners gemäß Anspruch 12 bis 15,
in dem der angepasste Spracherkenner sprecher-unabhängig ist.


**Revendications**

**1.** Générateur d'un système de reconnaissance de la parole adapté, comprenant un système de reconnaissance de la parole de base (201) pour un langage de base, et comprenant un corpus de données de parole additionnel (202), utilisé pour générer ledit système de reconnaissance de la parole adapté, et
ledit générateur comprenant des moyens de ré-estimation (203) pour ré-estimer des paramètres de modèle acoustique dudit système de reconnaissance de la parole de base, par une technique d'adaptation d'élocution, utilisant ledit corpus de données de parole additionnel, et
ledit générateur étant en outre **caractérisé en ce que** :

ledit corpus de données de la parole additionnel comprend une collection de données de parole spécifiques à un domaine.

**2.** Générateur selon la revendication 1,
dans lequel ledit corpus de données de parole additionnel est produit par une collecte, non supervisée ou supervisée.

**3.** Générateur selon l'une quelconque des revendications précédentes, dans lequel ledit modèle acoustique est un Modèle Hidden-Markov (HMM).

**4.** Générateur selon la revendication 3,
comprenant en outre des moyens de lissage (204) pour, en option, lisser les paramètres de modèles acoustiques ayant été ré-estimés.

**5.** Générateur selon la revendication 5,
dans lequel ladite technique d'adaptation d'élocution est l'adaptation Maximale A Posteriori (MAP), ou
dans lequel ladite technique d'adaptation d'élocution est l'adaptation à Régression Linéaire à Probabilité Maximale (MLLR).

**6.** Générateur selon la revendication 5,
dans lequel lesdits moyens de lissage exécutent un lissage de Bayes.

**7.** Générateur selon la revendication 6,
dans lequel le facteur de lissage K est compris dans la plage de 1 à 500.

**8.** Générateur selon la revendication 6,
dans lequel le facteur de lissage K est compris dans la plage de 20 à 60.

**9.** Générateur selon l'une quelconque des revendications ci-dessus, comprenant en outre des moyens d'itération (205) pour, en option, effectuer une itération sur le fonctionnement desdits moyens de ré-estimation et pour, en option, effectuer une itération sur le fonctionnement desdits moyens de lissage, d'après lesdits paramètres de modèles acoustiques ré-estimés, ou bien d'après lesdits paramètres de modèle acoustique de base.

**10.** Générateur selon la revendication 9,
dans lequel lesdits moyens d'itération font utilisation d'un corpus de données de parole additionnel modifié et/ou dans lequel lesdits moyens d'itération font utilisation d'un nouveau facteur de lissage K.

**11.** Générateur selon l'une quelconque des revendications ci-dessus, dans lequel ledit système de reconnaissance de la parole adapté est indépendant du locuteur.

**12.** Procédé de génération d'un système de reconnaissance de la parole adapté, utilisant un système de reconnaissance de la parole de base (201) pour un langage de base
ledit procédé comprenant une première étape (202), de fourniture d'un corpus de données de parole additionnel, ledit corpus de données de parole additionnel comprenant une collecte de données de paroles spécifiques à un domaine, et
ledit procédé comprenant une deuxième étape (203) de ré-estimation de paramètres de modèles acoustiques dudit système de reconnaissance de la parole de base, par une technique d'adaptation d'élocution utilisant ledit corpus de données de parole additionnel.

**13.** Procédé de génération d'un système de reconnaissance de la parole adapté selon la revendication 12,
ledit procédé comprenant une troisième étape (204) optionnelle, concernant le lissage des paramètres de modèles acoustiques ré-estimés.

**14.** Procédé de génération d'un système de reconnaissance de la parole adapté selon la revendication 12 ou 13,
ledit procédé comprenant une quatrième étape (205) optionnelle,
pour effectuer une itération de ladite première étape en fournissant un corpus de données de parole additionnel modifié, et
pour effectuer une itération sur lesdites deuxième et troisième étapes d'après lesdits paramètres de modèles acoustiques ré-estimés, ou bien d'après lesdits paramètres de modèles acoustiques de base.

**15.** Procédé de génération d'un système de reconnaissance de la parole adapté selon les revendications 12 à 14,
dans lequel ledit modèle acoustique est un Modèle Hidden-Markov (HMM), et
dans lequel ladite technique d'adaptation d'élocution est l'adaptation Maximale A Posteriori (MAP), ou
dans lequel ladite technique d'adaptation d'élocution est l'adaptation à Régression Linéaire à Probabilité Maximale (MLLR), et
dans lequel ladite troisième étape exécute un lissage de Bayes.

**16.** Procédé de génération d'un système de reconnaissance de la parole adapté selon les revendications 12 à 15,
dans lequel ledit système de reconnaissance de la parole adapté est indépendant du locuteur.

speech recognizer for base language
speaker independent, general domain —— 101

reestimation of language
parameters by speaker adaptation
techniques

enrollment script read
by user

102

103

speaker dependent speech
recognizer

104

FIG. 1

speaker independent, general domain
speech recognizer for base language — 201

collection of dialect and/or
domain specific speech data
unsupervised or supervised — 202

reestimation of HMM parameters by
speaker adaption techniques
e.g. MAP or MLLR — 203

optional: Bayesian smoothing
of reestimated parameters — 204

205 — sufficient improvement ?   no

yes

speaker independent speech
recognizer for dialect and/or
specific domain — 206

optional: reestimation of
language parameters by
speaker adaptation techniques

enrollment script
read by user

speaker dependent
speech recognizer

FIG. 2

| Test Speaker | VV | VV-S | smoothing 1 | VV-G factor 50 | k 500 |
|---|---|---|---|---|---|
| German | 1.00 | 1.04 | 1.30 | 1.26 | 1.19 |
| Austrian | 1.53 | 1.19 | 1.08 | 1.07 | 1.09 |

FIG. 3